# EUROPÄISCHE PATENTSCHRIFT

(11) **EP 1 217 704 B1**
(45) Veröffentlichungstag und Bekanntmachung des Hinweises auf die Patenterteilung: **28.06.2006**
(21) Anmeldenummer: 01102448.6
(22) Anmeldetag: 03.02.2001
(51) Int. Cl.: H02G 3/04

(54) **Schutzummantelung für Kabel, Hüllrohre, Kabelbäume und dergleichen**
Protective sleeve for cables, jacket tubes, cable harnesses and the like
Gaine de protection pour câbles, tubes de gainage, faisceaux de câbles et similaires

(30) Priorität: 22.12.2000 DE 20021786 U
(43) Veröffentlichungstag der Anmeldung: 26.06.2002
(73) Patentinhaber: Bernatz, Wolfgang, 67744 Rathskirchen (DE)
(72) Erfinder: Bernatz, Wolfgang, 67744 Rathskirchen (DE)
(74) Vertreter: Patentanwälte Möll und Bitterich

(56) Entgegenhaltungen:
- EP-A- 0 886 357
- US-A- 3 941 159
- US-A- 4 382 303

## Beschreibung

Die Erfindung betrifft Schutzummantelungen für Kabel, Leitungen, Litzen, Hüllrohre und dergleichen langgestreckte, bewegliche Gegenstände, insbesondere für Kabelbäume, die in rotierenden bzw. vibrierenden Maschinen, Anlagen oder Fahrzeugen verlegt werden sollen, gemäß dem Oberbegriff des Anspruchs 1.

Sind in rotierenden bzw. vibrierenden Maschinen, Anlagen oder Fahrzeugen langgestreckte Gegenstände wie Elektrokabel, Litzen, Leitungen, Hüllrohre von Bowdenzügen oder auch Kabelbäume verlegt, so werden diese in Schwingungen versetzt. Dadurch werden unerwünschte Geräusche erzeugt. Außerdem können Beschädigungen auftreten, beispielsweise durch scharfe Blechkanten. Aus diesem Grunde werden zusätzliche Schutzummantelungen angebracht.

Eine derartige Schutzummantelung ist bekannt aus der DE-U 295 10 907 und der DE-U 297 10 583.3. Diese besteht aus einer glatten Außenbahn, auf die ein Schaumstoffstreifen innen so aufgeklebt ist, dass die Außenbahn entlang der einen Längskante einen Überschlag bildet. Die Innenseite dieses Überschlags ist mit einem selbstklebenden Material belegt, ebenso die freie Oberfläche des Schaumstoffstreifens. Dadurch steht die ganze Innenfläche des Schaumstoffstreifens zur Fixierung der Schutzummantelung auf den zu schützenden Gegenständen zur Verfügung. Durch diese Materialkombination konnten hohe Abriebfestigkeit, gute Geräuschdämpfung, gute Verarbeitbarkeit und leichte Verlegbarkeit günstig miteinander kombiniert werden.

Aus der EP 0 886 358 A ist eine weitere Schutzummantelung für derartige langgestreckte, bewegliche Gegenstände bekannt. Diese verwendet als Außenschicht ein Flausch- oder Veloursband. Auf dessen Überschlag ist anstelle der selbstklebenden Schicht ein Hakenband befestigt. Hakenband und Veloursband bilden einen Klettverschluss zum Schließen der Schutzummantelung. Zur Fixierung der Schutzummantelung an dem zu schützenden Gegenstand ist ein mit einem Schutzpapier abgedeckter schmaler, selbstklebender Klebestreifen vorgesehen. Komplettiert wird die bekannte Schutzummantelung durch Vlies- und/oder Schaumstoffschichten. Die Befestigung aller Schichten und Bänder untereinander erfolgt mit Hilfe geeigneter Kaschier- bzw. Kleberschichten.

Diese Schutzummantelungen lassen sich schnell und exakt an den zu schützenden Gegenständen befestigen. Auch erfüllen sie ihre Schutzfunktionen bestens. Es hat sich aber herausgestellt, dass die Herstellung dieser Schutzummantelungen noch einigermaßen zeit- und kostenaufwendig ist. Insbesondere die Kleberschichten, die zum Verbinden der verschiedenen Schichten der Schutzummantelung benötigt werden, sind problematisch. Zum einen verlangsamen sie die Produktion, da sie aufgetragen werden, ablüften und/oder aktiviert werden müssen. Des weiteren begrenzen sie aber auch die praktischen Einsatzmöglichkeiten, da sie beispielsweise höhere Temperaturen nicht vertragen oder die Schutzummantelung verspröden.

Der vorliegenden Erfindung liegt daher die Aufgabe zugrunde, eine Schutzummantelung der eingangs genannt Art anzugeben, die sehr viel einfacher und schneller hergestellt werden kann.

Diese Aufgabe wird gelöst durch eine Schutzummantelung mit den Merkmalen des Anspruchs 1.

Auch die erfindungsgemäße Schutzummantelung besteht aus mehreren Schichten, von denen jede auf eine bestimmte Funktion hin optimiert ist. Im Gegensatz zu bisherigen Lösungen bestehen die Außenschicht der Schutzummantelung und das Trägerband des Hakenbandes aus dem gleichen thermoplastischen Kunststoff und können daher problemlos miteinander verschweißt werden, wobei die Verschweißung entweder mittels Ultraschall oder auch thermisch, beispielsweise durch Flammkaschieren, erfolgen kann. Dabei verbinden sich die gleichen Kunststoffmaterialien praktisch unlösbar miteinander, ohne dass irgendwelche Zusatzstoffe benötigt werden.

Auch eine Verschweißung mittels Laser ist vorstellbar, wenn die Kunststoffe die Bedingungen an Transparenz und Absorption des Laserstrahls erfüllen.

Vorzugsweise besteht auch die Innenschicht aus einem Material, welches mit dem der Außenschicht verträglich, nach Möglichkeit sogar identisch ist. Dadurch können auch diese Schichten mit oder ohne Kleber miteinander verbunden werden, vorzugsweise mittels Flammkaschieren.

Gemäß einer Weiterbildung der Erfindung besteht der Schaumstoff aus Polyurethan. Auch Polyurethan lässt sich problemlos flammkaschieren.

Während Produktion, Lager und Transport ist das Hakenband vorteilhafterweise mit einer Schutzfolie abgedeckt. Dadurch wird verhindert, dass die Haken des Hakenbandes sich verhängen. Die Schutzfolie ist jedoch schnell abgezogen, so dass die Schutzummantelung sicher verschlossen werden kann.

Anhand der Zeichnung soll die Erfindung in Form zweier Ausführungsbeispiele näher erläutert werden. Es zeigen jeweils in rein schematischer Darstellung
- Fig. 1: eine erste Schutzummantelung und
- Fig. 2: eine zweite Schutzummantelung.

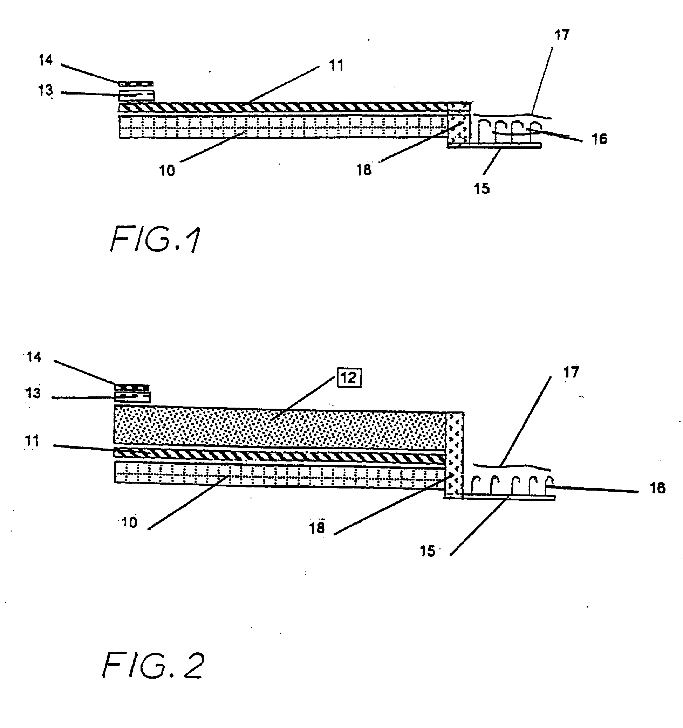

Fig. 1 zeigt in rein schematischer Darstellung den Schichtenaufbau einer ersten Schutzummantelung. Diese besteht aus einer Außenschicht 10 in Form eines Flausch- oder Veloursbandes aus einem abriebfesten, widerstandsfähigen Material, vorzugsweise Polyester. Darauf ist als Innenschicht ein Vlies 11 befestigt. Dieses besteht wenigstens teilweise aus dem gleichen Material wie die Außenschicht 10, so dass eine Flammkaschierung möglich ist.

Entlang der linken Längskante der Innenschicht 11 ist ein Selbstklebeband 13 angebracht, welches mit einem Schutzpapier 14 abgedeckt ist. Nach Abziehen des Schutzpapiers 14 wird die Schutzummantelung mit Hilfe des Selbstklebebandes 13 an dem zu schützenden Gegenstand angeklebt und um den Gegenstand herumgewickelt. Durch dieses Klebeband 13 wird die Schutzummantelung am Kabelbaum auch gegen Verschieben gesichert.

An der gegenüberliegenden Längskante der Außenschicht 10 ist ein Hakenband befestigt, bestehend aus einem Trägerband 15 mit Haken 16. Das Trägerband 15 überlappt die Außenschicht 10. Das Trägerband 15 besteht wenigstens teilweise aus dem gleichen thermoplastischen Kunststoffmaterial wie die Außenschicht 10. Dadurch ist es möglich, beide Schichten 10, 15 ohne Hilfsmittel zu verschweißen, entweder mittels Ultraschall, mittels Flamme oder mittels Laser. Dadurch bildet sich eine durchgehende Schweißzone 18.

Um die Handhabung während Produktion, Lager und Transport sicher zu machen, sind die Haken 16 mittels einer Schutzfolie 17 abgedeckt. Diese wird nach dem Umwickeln um den zu schützenden Gegenstand abgezogen, worauf die Haken 16 mit der Außenseite des Flausch- oder Veloursbandes 10 verhaken und so die Schutzummantelung schließen.

Fig. 2 zeigt ein zweites Ausführungsbeispiel einer Schutzummantelung. Hier umfasst die Innenschicht zusätzlich einen Schaumstoff 12, vorzugsweise einen Polyurethanschaum. Bei der Verbindung von Außenschicht 10, Vlies 11 und Schaumstoff 12 mittels Flammkaschieren entsteht eine Mischschicht. Diese stört die Schweißzone 18 nicht.

Durch die Verwendung von Schaumstoff 12 wird die schallisolierende Wirkung erheblich erhöht, während die mechanische Schutzwirkung außen unverändert hervorragend ist.

## Patentansprüche

1. Schutzummantelung für Kabel, Leitungen, Litzen, Hüllrohre und dergleichen langgestreckte, bewegliche Gegenstände, die in rotierenden bzw. vibrierenden Maschinen, Anlagen oder Fahrzeugen verlegt werden, insbesondere für Kabelbäume in Kraftfahrzeugen, in Waschmaschinen, in Kompressoren und dergleichen, im wesentlichen umfassend
- eine abriebfeste, widerstandsfähige Außenschicht (10) aus einem Flausch- bzw. Veloursband,
- darauf kaschiert eine Innenschicht (11, 12),
- darauf entlang der einen Längskante des Bandes (10) kaschiert eine selbstklebende Schicht (13), gegebenenfalls abgedeckt mit einem Schutzpapier (14),
- und entlang der anderen Längskante des Bandes (10) befestigt ein Hakenband (15, 16),
- das Hakenband besteht aus einem Trägerband (15) und Haken (16), **gekennzeichnet durch** die Merkmale:
- die Außenschicht (10) und das Trägerband (15) bestehen aus demselben thermoplastischen Kunststoff,
- Außenschicht (10) und Trägerband (15)
-- überlappen sich
-- und sind in der Überlappungszone (18) miteinander verschweißt.

2. Schutzummantelung nach Anspruch 1, **gekennzeichnet durch** das Merkmal:
- Außenschicht (10) und Trägerband (15) sind mittels Ultraschall verschweißt.

3. Schutzummantelung nach Anspruch 1, **gekennzeichnet durch** das Merkmal:
- Außenschicht (10) und Trägerband (15) sind mittels Laser verschweißt.

4. Schutzummantelung nach einem der Ansprüche 1 bis 3, **gekennzeichnet durch** das Merkmal:
- die Innenschicht umfasst ein Vlies (11).

5. Schutzummantelung nach einem der Ansprüche 1 bis 4, **gekennzeichnet durch** das Merkmal:
- die Innenschicht umfasst einen Schaumstoff (12).

6. Schutzummantelung nach einem der Ansprüche 1 bis 4, **gekennzeichnet durch** das Merkmal:
- die Innenschicht ist ein Filz aus Naturwolle, synthetischen Fasern, keramischen Fasern oder Werkstoffen aus Glaswolle.

7. Schutzummantelung nach Anspruch 4 oder 5, **gekennzeichnet durch** das Merkmal:
- Vlies (11) und/oder Schaumstoff (12) sind mit der Außenschicht (10) flammkaschiert.

8. Schutzummantelung nach Anspruch 7, **gekennzeichnet durch** das Merkmal:
- Außenschicht (10) und Vlies (11) bzw. Schaumstoff (12) bestehen aus der gleichen Materialbasis.

9. Schutzummantelung nach einem der Ansprüche 5 bis 8, **gekennzeichnet durch** das Merkmal:
- der Schaumstoff (12) besteht aus Polyurethan.

10. Schutzummantelung nach einem der Ansprüche 1 bis 9, **gekennzeichnet durch** das Merkmal:
- das Hakenband (15, 16) ist mit einem Schutz (17) abgedeckt.

## Claims

1. A protective sheathing for cables, leads, strands, encasing tubes and similar elongate mobile articles which are installed in rotating or vibrating machines, installations or vehicles, in particular for cable harnesses in motor vehicles, in washing machines, in compressors and the like, substantially comprising
- a wear-proof, resistant outer layer (10) composed of a fleece or velour strip,
- an inner layer (11,12) laminated thereon,
- a self-adhesive layer (13) laminated along one longitudinal edge of the inner layer (11,12), optionally covered with a protective paper (14),
- and a hook band (15,16) fastened along the other longitudinal edge of the strip (10),
- the hook band consists of a carrier band (15) and hooks (16),
**characterised by** the features:
- the outer layer (10) and the carrier band (15) consist of the same thermoplastic synthetic material,
- the outer layer (10) and carrier band (15)
-- overlap one another
-- and are welded together in the overlapping zone (18).

2. A protective sheathing according to Claim 1, **characterised by** the feature:
- the outer layer (10) and the carrier band (15) are ultrasonically welded.

3. A protective sheathing according to Claim 1, **characterised by** the feature:
- the outer layer (10) and the carrier band (15) are laser-welded.

4. A protective sheathing according to any one of Claims 1 to 3, **characterised by** the feature:
- the inner layer comprises a non-woven fabric (11).

5. A protective sheathing according to any one of Claims 1 to 4, **characterised by** the feature:
- the inner layer comprises a foamed material (12).

6. A protective sheathing.according to any one of Claims 1 to 4, **characterised by** the features:
- the inner layer (10) is a felt composed of natural wool, synthetic fibres, ceramic fibres or materials composed of glass wool.

7. A protective sheathing according to Claim 4 or 5, **characterised by** the feature:
- the non-woven fabric (11) and/or foamed material (12) are flame-laminated to the outer layer (10).

8. A protective sheathing according to Claim 7, **characterised by** the feature:
- the outer layer (10) and non-woven fabric (11) or foamed material (12) consist of the same base material

9. A protective sheathing according to any one of Claims 5 to 8, **characterised by** the feature:
- the foamed material (12) consists of polyurethane.

10. A protective sheathing according to any one of Claims 1 to 9, **characterised by** the feature:
- the hook band is covered with a protecting means (17).

## Revendications

1. Enrobage de protection pour câbles, conduites, torons, tubes de gainage et objets mobiles allongés similaires qui sont posés dans des machines, installations ou véhicules à rotation ou à vibration, en particulier pour des faisceaux de câbles dans des véhicules automobiles, dans des machines à laver, dans des compresseurs et similaires, comprenant substantiellement
- une couche extérieure robuste, résistante à l'abrasion (10) composée d'une bande de tissu à longs poils ou de velours,
- une couche intérieure (11, 12) contrecollée sur celle-ci,
- une couche autoadhésive (13) contrecollée sur celle-ci le long d'un bord longitudinal de la bande (10), éventuellement recouverte d'une feuille de protection (14),
- et une bande d'agrafes (15, 16) fixée le long de l'autre bord longitudinal de la bande (10),
- la bande d'agrafes étant composée d'une bande de support (15) et d'agrafes (16),
**caractérisé en ce que** :
- la couche extérieure (10) et la bande de support (15) se composent de la même matière thermoplastique,
- la couche extérieure (10) et la bande de support (15)
. se recouvrent
. et sont soudées ensemble dans la zone de recouvrement (18).

2. Enrobage de protection selon la revendication 1, **caractérisé en ce que** :
- la couche extérieure (10) et la bande de support (15) sont soudées ensemble par ultrason.

3. Enrobage de protection selon la revendication 1, **caractérisé en ce que** :
- la couche extérieure (10) et la bande de support (15) sont soudées ensemble au laser.

4. Enrobage de protection selon l'une quelconque des revendications 1 à 3, **caractérisé en ce que** :
- la couche intérieure comprend un non-tissé (11).

5. Enrobage de protection selon l'une quelconque des revendications 1 à 4, **caractérisé en ce que** :
- la couche intérieure comprend une mousse synthétique (12).

6. Enrobage de protection selon l'une quelconque des revendications 1 à 4, **caractérisé en ce que** :
- la couche intérieure est un feutre de laine naturelle, de fibres synthétiques, de fibres céramiques ou de matières composées de laine de verre.

7. Enrobage de protection selon la revendication 4 ou 5, **caractérisé en ce que** :
- le non-tissé (11) et/ou la mousse synthétique (12) sont contrecollés à la flamme avec la couche extérieure (10).

8. Enrobage de protection selon la revendication 7, **caractérisé en ce que** :
- la couche extérieure (10) et le non-tissé (11) ou la mousse synthétique (12) se composent de la même base de matière.

9. Enrobage de protection selon l'une quelconque des revendications 5 à 8, **caractérisé en ce que** :
- la mousse synthétique (12) se compose de polyuréthane.

10. Enrobage de protection selon l'une quelconque des revendications 1 à 9, **caractérisé en ce que** :
- la bande d'agrafes (15, 16) est recouverte d'une protection (17).
